# EUROPEAN PATENT APPLICATION

(11) **EP 4 135 289 A1**
(43) Date of publication of application: **15.02.2023**
(21) Application number: 22172739.9
(22) Date of filing: 11.05.2022
(51) Int. Cl.: H04L 41/22, H04L 12/40, H04L 43/067, H04L 41/0631, H04L 41/12

(54) **METHOD OF DISPLAYING COMMUNICATION STATE AND COMMUNICATION STATE DISPLAYING PROGRAM**

(30) Priority: 13.08.2021 JP 2021131923
(71) Applicant: FUJITSU LIMITED, Kawasaki-shi, Kanagawa 211-8588 (JP)
(72) Inventor: Yoshioka, Hisao, Kawasaki-shi, Kanagawa, 211-8588 (JP); Moriya, Masayoshi, Kawasaki-shi, Kanagawa, 211-8588 (JP)
(74) Representative: Hoffmann Eitle

(57) **Abstract**

A method of displaying a communication state, the method comprising: obtaining, from a storage device, specification information and history information, the specification information being information indicating a specification of a communication performed in response to an occurrence of an event, the history information being information indicating a history of the communication performed in response to the occurrence of the event; identifying, from the specification information, first specification information corresponding to the communication performed at a relative time point separated from a start point set at an occurrence time point of the event; identifying, out of the history information, first history information corresponding to the communication performed at the relative time point; and outputting, to an output device, first correspondence information in which information indicating the communication corresponding to the first specification information and information on the communication corresponding to the first history information are associated with each other.

## Description

### FIELD

Embodiments discussed herein are related to a method of displaying a communication state and a communication state displaying program.

### BACKGROUND

Today, a plurality of electronic devices (hereinafter, also referred to as engine control units (ECUs)) for realizing various functions are mounted in an automobile. Such ECUs are communicably coupled to each other via, for example, an in-vehicle network and transmit and receive data to and from each other so as to realize the functions for performing engine control, brake control, and so forth.

Japanese Laid-open Patent Publication No. 2018-056785 is disclosed as related art.

### SUMMARY

### TECHNICAL PROBLEMS

In a case where an automobile in which the ECUs as described above is mounted is developed, an operator performs, for example, testing on whether communication between the ECUs (hereinafter, also referred to as communication testing) is performed as designed in advance.

The operator obtains, for example, history of the communication trafficking between the ECUs by actually operating the automobile. For example, the operator compares the obtained communication history with the content of a specification in which the specification of the communication is defined (hereinafter, also referred to as a communication specification), thereby determining whether the communication between the ECUs has been normally performed.

However, in this case, the operator desirably grasps how data is transmitted and received between the ECUs by reading and understanding the content of the communication specification. Thus, in some cases in the communication testing as described above, a load of operating performed by the operator may increase depending on, for example, the number of the ECUs mounted in the automobile.

Accordingly, in one aspect, an object of the present disclosure is to provide a method of displaying a communication state and a communication state displaying program with which an increase in a load of operating due to execution of communication testing may be suppressed.

### SOLUTION TO PROBLEM

According to an aspect of the embodiments, there is provided a computer-implemented method of displaying a communication state. In an example, the method includes: obtaining, from a storage device, specification information and history information, the specification information being information indicating a specification of a communication performed in response to an occurrence of an event, the history information being information indicating a history of the communication performed in response to the occurrence of the event; identifying, out of the obtained specification information, first specification information corresponding to the communication performed at a relative time point separated from a start point set at an occurrence time point of the event; identifying, out of the obtained history information, first history information corresponding to the communication performed at the relative time point; and outputting, to an output device, first correspondence information in which information indicative of the communication corresponding to the identified first specification information and information on the communication corresponding to the identified first history information are associated with each other.

### ADVANTAGEOUS EFFECTS OF INVENTION

According to the one aspect, the increase in the load of operating due to execution of the communication testing may be suppressed.

### BRIEF DESCRIPTION OF DRAWINGS

FIG. 1 is a diagram explaining the configuration of an information processing system;
FIG. 2 is a diagram explaining the hardware configuration of an information processing apparatus;
FIG. 3 is a block diagram of the functions of the information processing apparatus;
FIG. 4 is a flowchart explaining the overview of a communication state displaying process according to a first embodiment;
FIG. 5 is a flowchart explaining the details of the communication state displaying process according to the first embodiment;
FIG. 6 is a flowchart explaining the details of the communication state displaying process according to the first embodiment;
FIG. 7 is a flowchart explaining the details of the communication state displaying process according to the first embodiment;
FIG. 8 is a diagram explaining a specific example of operation information;
FIG. 9 is a diagram explaining a specific example of specification information;
FIG. 10 is a diagram explaining a specific example of first sequence information;
FIG. 11 is a schematic diagram explaining the first sequence information;
FIG. 12 explains a specific example of a screen;
FIG. 13 is a diagram explaining a specific example of history information;
FIG. 14 explains a specific example of the screen;
FIG. 15 is a diagram explaining a specific example of second sequence information;
FIG. 16 is a schematic diagram explaining the first sequence information and the second sequence information;
FIG. 17 explains a specific example of the screen;
FIG. 18 explains a specific example of the screen;
FIG. 19 is a flowchart explaining the communication state displaying process according to a second embodiment;
FIG. 20 is a flowchart explaining the communication state displaying process according to the second embodiment;
FIG. 21 is a flowchart explaining the communication state displaying process according to the second embodiment.
FIG. 22 explains a specific example of the screen;
FIG. 23 explains a specific example of the screen;
FIG. 24 explains a specific example of the screen; and
FIG. 25 explains a specific example of the screen.

### DESCRIPTION OF EMBODIMENTS

### [Configuration of Information Processing System according to First Embodiment]

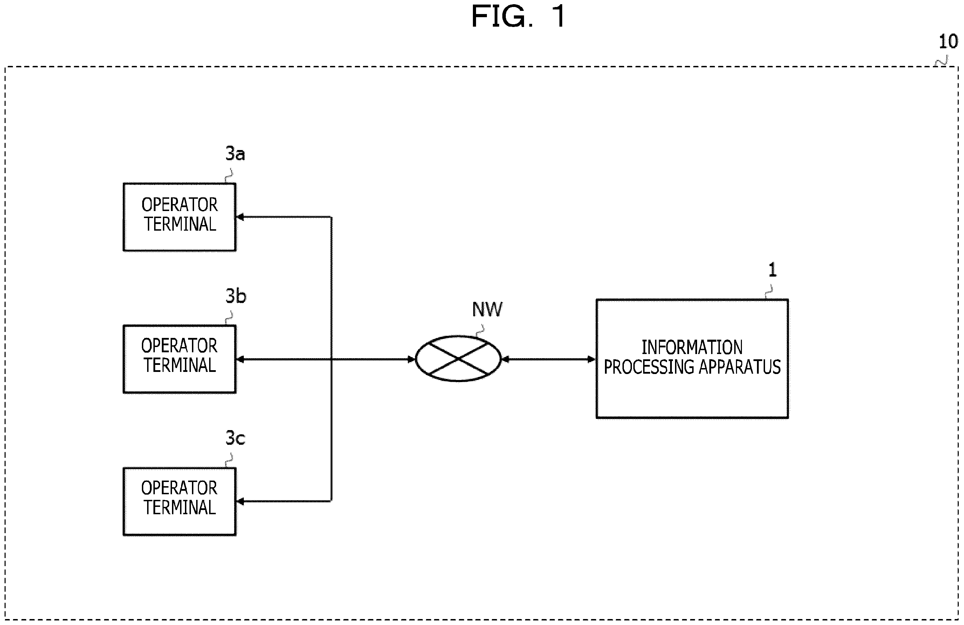

First, the configuration of an information processing system 10 will be described. FIG. 1 is a diagram explaining the configuration of the information processing system 10.

The information processing system 10 includes, for example, an information processing apparatus 1 and operator terminals 3a, 3b, and 3c.

Each of the operator terminals 3a, 3b, and 3c is, for example, a personal computer (PC) on which an operator (not illustrated) who performs various types of testing on an automobile to be tested (not illustrated) performs, for example, inputting of desired information and is a terminal that may access the information processing apparatus 1 via a network NW such as the Internet. Hereinafter, the operator terminals 3a, 3b, and 3c are also collectively and simply referred to as operator terminals 3. Although a case where the information processing system 10 includes three operator terminals 3 is described below, the number of the operator terminals 3 included in the information processing system 10 is not necessarily three.

The information processing apparatus 1 is, for example, one or more physical machines or virtual machines that perform a process of displaying a communication state between engine control units (ECUs) mounted on the automobile to be tested (hereinafter, also referred to as a communication state displaying process).

For example, the information processing apparatus 1 obtains, from a storage unit (not illustrated), for example, information on a specification of communication performed in response to an occurrence of an event (hereinafter, also referred to as specification information) and information on history of the communication having been performed in response to the occurrence of the event (hereinafter, also referred to as history information). The occurrence of the event corresponds to a case where, for example, an ECU that is a transmission destination receives from an ECU that is a transmission source a message indicating that the gear is changed to the drive. Thus, in this case, the information processing apparatus 1 obtains, for example, the specification information on the specification of the transmission and reception of the message performed by the transmission-destination ECU in response to reception of the message indicating that the gear is changed to the drive and the history information on the history of the transmission and reception of the message having been actually performed by the transmission-destination ECU in response to reception of the message indicating that the gear is changed to the drive.

For example, out of the obtained specification information, the information processing apparatus 1 identifies specification information corresponding to communication performed at a relative time of day (hereinafter, also referred to as first specification information) separated from a start point set at an occurrence time of day of the event (hereinafter, also simply referred to as a relative time of day), and out of the obtained history information, the information processing apparatus 1 identifies history information corresponding to the communication having been performed at the relative time of day (hereinafter, also referred to first history information) separated from the start point set at the occurrence time of day of the event.

Then, for example, the information processing apparatus 1 outputs (displays) to output devices (not illustrated) of the operator terminals 3 information (hereinafter, also referred to as correspondence information or a first correspondence information) in which information indicative of the communication corresponding to the identified first specification information and information on the communication corresponding to the identified first history information are associated with each other.

For example, the information processing apparatus 1 according to the present embodiment expresses both the following times of day by using the relative time of day separated from the start point set at the occurrence time of day of the event: a time of day of a message included in the specification information (time of day at which the message is planned to be transmitted and received); and a time of day included in the history information (time of day at which the message has been actually transmitted and received). The information processing apparatus 1 outputs, for example, specification information (first specification information) and history information (first history information) at a specific relative time of day in association with each other.

In this way, the information processing apparatus 1 according to the present embodiment allows the operators to browse information (correspondence information) with which whether transmission and reception of each message have been performed at the specified time of day may be easily determined. Accordingly, the operators may easily check a result of communication testing performed between the ECUs when the operators browse the information output to the output devices. Thus, the operators may suppress an increase in a load of operating due to the execution of the communication testing between the ECUs.

### [Hardware Configuration of Information Processing System]

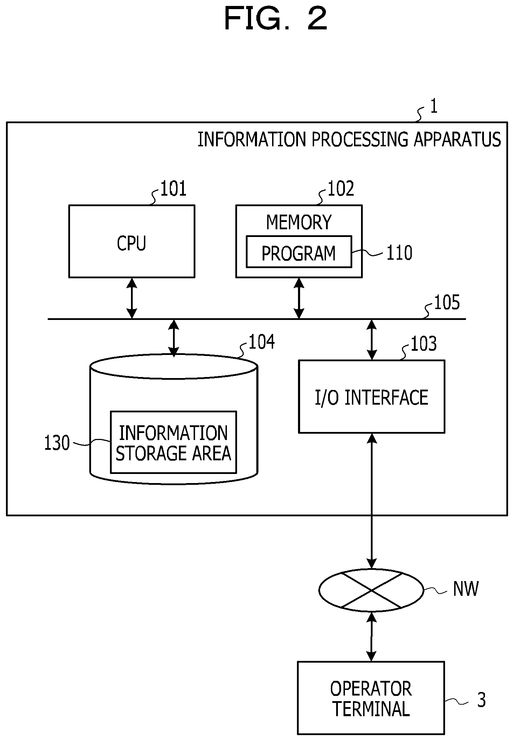

Next, a hardware configuration of the information processing system 10 will be described. FIG. 2 is a diagram explaining the hardware configuration of the information processing apparatus 1.

As illustrated in FIG. 2, the information processing apparatus 1 includes a central processing unit (CPU) 101, which is a processor, a memory 102, an input/output (I/O) interface 103, and a storage medium 104. These components are coupled to each other via a bus 105.

The storage medium 104 includes, for example, a program storage area (not illustrated) that stores a program 110 for performing the communication state displaying process. The storage medium 104 includes, for example, an information storage area 130 that stores information used when the communication state displaying process is performed. The storage medium 104 may be, for example, a hard disk drive (HDD) or a solid-state drive (SSD).

The CPU 101 executes the program 110 loaded from the storage medium 104 to the memory 102 to perform the communication state displaying process.

The I/O interface 103 is, for example, an interface device such as a network interface card and may access the operator terminals 3 via the network NW such as the Internet.

### [Functions of Information Processing System]

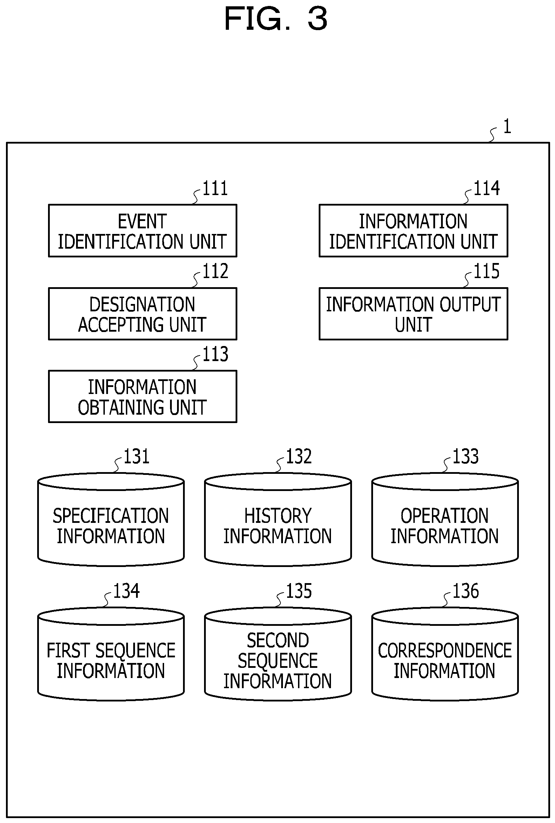

Next, the functions of the information processing system 10 will be described. FIG. 3 is a block diagram of the functions of the information processing apparatus 1.

As illustrated in FIG. 3, for example, the information processing apparatus 1 causes the program 110 and the hardware such as the CPU 101 and the memory 102 to organically cooperate with each other to realize various functions including an event identification unit 111, a designation accepting unit 112, an information obtaining unit 113, an information identification unit 114, and an information output unit 115 (hereinafter, also referred to as an information displaying unit 115).

The information processing apparatus 1 stores, for example, in the information storage area 130 specification information 131, history information 132, operation information 133, first sequence information 134, second sequence information 135, and correspondence information 136.

The event identification unit 111 identifies, for example, an event subjected to the communication testing (for example, reception of a message indicating that the gear has been changed to the drive). For example, the event identification unit 111 refers to the operation information 133 stored in the information storage area 130 to identify an event corresponding to the identification information of the operators. The operation information 133 is, for example, information indicative of an event for which each operator plans to perform the communication testing.

The designation accepting unit 112 accepts, for example, designation of an event for which the communication testing is performed. For example, the designation accepting unit 112 accepts, for example, designation, of an event, performed by the operators via the operator terminals 3.

The information obtaining unit 113 obtains, out of the specification information 131 stored in the information storage area 130, for example, specification information 131 of the communication performed in response to the occurrence of the event identified by the event identification unit 111 or the event the designation of which is accepted by the designation accepting unit 112 occurs. The specification information 131 is, for example, information indicative of the specification of communication between the ECUs performed in response to the occurrence of each event.

The information obtaining unit 113 obtains, out of the history information 132 stored in the information storage area 130, for example, history information 132 of the communication having been performed in response to the occurrence of the event identified by the event identification unit 111 or the event the designation of which is accepted by the designation accepting unit 112. The history information 132 is, for example, information indicative of the history of communication between the ECUs having been actually performed in response to the occurrence of each event.

The information identification unit 114 identifies, out of the specification information 131 obtained by the information obtaining unit 113, for example, specification information 131 (first specification information 131) corresponding to the communication performed at the relative time of day separated from the start point set at the occurrence time of day of the event.

Also, the information identification unit 114 identifies, out of the history information 132 obtained by the information obtaining unit 113, for example, history information 132 (first history information 132) corresponding to the communication having been performed at the relative time of day separated from the start point set at the occurrence time of day of the event.

The information output unit 115 outputs to the output devices (not illustrated) of the operator terminals 3, for example, correspondence information 136 in which information indicative of the communication corresponding to the specification information 131 identified by the information identification unit 114 and information on the communication corresponding to the history information 132 identified by the information identification unit 114 are associated with each other. The first sequence information 134 and the second sequence information 135 will be described later.

### [Overview of First Embodiment]

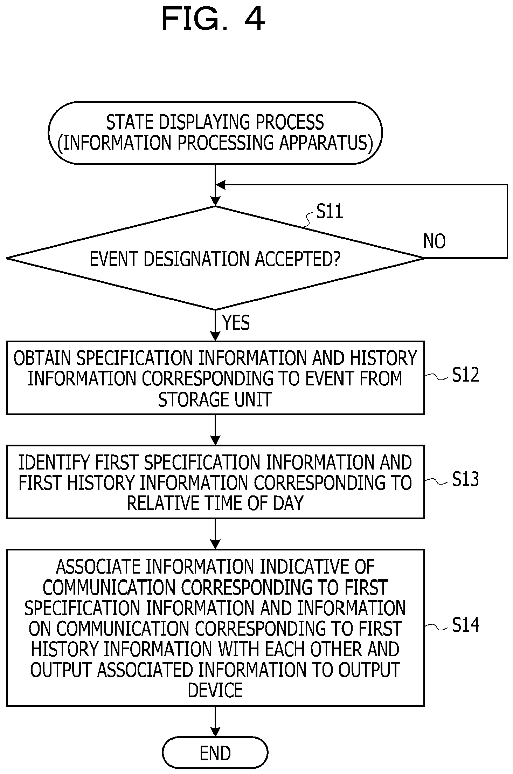

Next, an overview of a first embodiment will be described. FIG. 4 is a flowchart explaining the overview of the communication state displaying process according to the first embodiment.

As illustrated in FIG. 4, the information processing apparatus 1 waits, for example, until designation of an event subjected to the communication testing is accepted (NO in S11).

In a case where the designation of the event subjected to the communication testing is accepted (YES in S11), for example, the information processing apparatus 1 obtains from the information storage area 130 the specification information 131 and the history information 132 corresponding to the event the designation of which is accepted (S12).

Next, for example, out of the specification information 131 obtained in the processing in S12, the information processing apparatus 1 identifies the specification information 131 corresponding to communication performed at the relative time of day separated from the start point set at the occurrence time of day of the event having been designated in the processing in S11, and out of the history information 132 having been obtained in the processing in S12 the designation of which is accepted in the processing in S11, the information processing apparatus 1 identifies the history information 132 corresponding to the communication having been performed at the relative time of day separated from the start point set at the occurrence time of day of the event (S13).

Then, for example, the information processing apparatus 1 outputs to the output devices (not illustrated) the correspondence information 136 in which information indicative of the communication corresponding to the specification information 131 identified in the processing in S13 and information on the communication corresponding to the history information 132 identified in the processing in S13 are associated with each other (S14).

For example, the information processing apparatus 1 outputs, for example, the correspondence information 136 that indicates whether the specification information 131 corresponding to the communication performed at the relative time of day separated from the start point set at the occurrence time of day of the event (first specification information 131) and the history information 132 corresponding to the communication having been performed at the relative time of day separated from the start point set at the occurrence time of day of the event (first history information 132) indicate the same content.

In this way, the information processing apparatus 1 according to the present embodiment allows the operators to browse information (correspondence information) with which whether transmission and reception of each message have been performed at the specified time of day may be easily determined. Accordingly, the operators may easily check the result of the communication testing performed between the ECUs when the operators browse the information output to the output devices. Thus, the operators may suppress an increase in a load of operating due to the execution of the communication testing between the ECUs.

### [Details of First Embodiment]

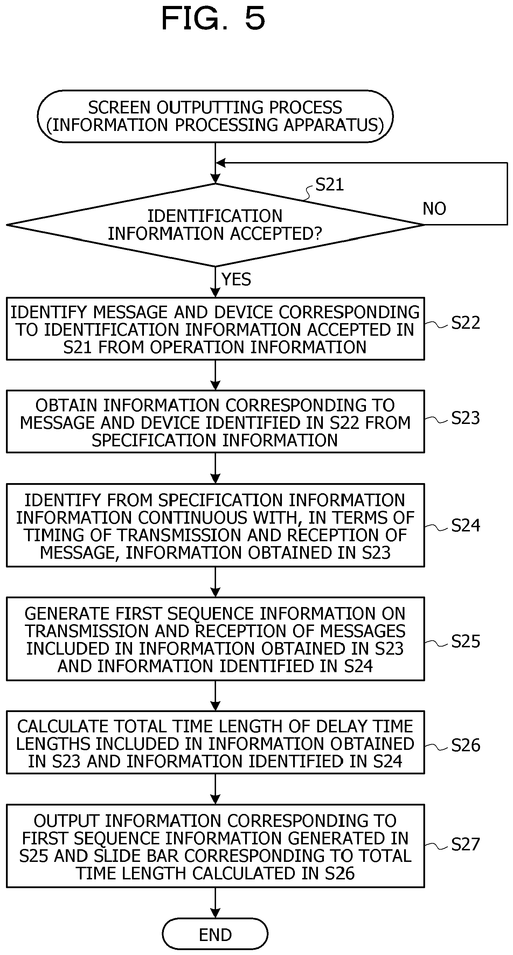

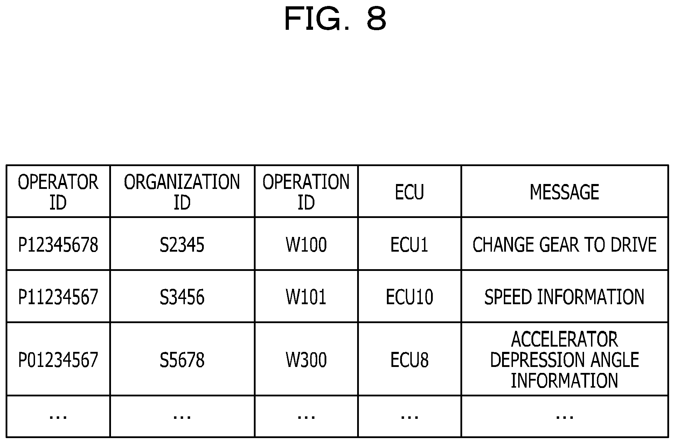

Next, the details of the first embodiment will be described. FIGs. 5 to 7 are flowcharts explaining the details of the communication state displaying process according to the first embodiment. FIGs. 8 to 18 are diagrams explaining the details of the communication state displaying process according to the first embodiment.

### [Screen Outputting Process]

First, a process of outputting a screen to be browsed by the operators when the operators perform the communication testing (hereinafter, also referred to as a screen outputting process) in the communication state displaying process will be described. FIG. 5 is a flowchart explaining the screen outputting process.

As illustrated in FIG. 5, the event identification unit 111 waits until, for example, identification information of the operators input by the operators via the operator terminals 3 is accepted (NO in S21).

In a case where the identification information is accepted (YES in S21), for example, the event identification unit 111 refers to the operation information 133 stored in the information storage area 130 and identifies a message and a device (ECU) corresponding to the identification information accepted in the processing in S21 (S22). A specific example of the operation information 133 will be described below.

### [Specific Example of Operation Information]

FIG. 8 is a diagram explaining a specific example of the operation information 133.

The operation information 133 illustrated in FIG. 8 includes, as items, an "OPERATOR ID", an "ORGANIZATION ID", an "OPERATION ID", an "ECU", and a "MESSAGE". The "OPERATOR ID" identifies the operators. The "ORGANIZATION ID" identifies organizations to which the operators belong. The "OPERATION ID" identifies items of the communication testing performed by the operators. The "ECU" identifies the ECUs subjected to the communication testing. The "MESSAGE" identifies messages transmitted and received between the ECUs.

For example, in the operation information 133 illustrated in FIG. 8, in a piece of the information on the first line, "P12345678" is set as the "OPERATOR ID", "S2345" is set as the "ORGANIZATION ID", "W100" is set as the "OPERATION ID", "ECU1" is set as the "ECU", and "CHANGE GEAR TO DRIVE" is set as the "MESSAGE".

Also in the operation information 133 illustrated in FIG. 8, in a piece of the information on the second line, "P11234567" is set as the "OPERATOR ID", "S3456" is set as the "ORGANIZATION ID", "W101" is set as the "OPERATION ID", "ECU10" is set as the "ECU", and "SPEED INFORMATION" is set as the "MESSAGE". Description of other pieces of the information included in FIG. 8 is omitted herein.

Accordingly, in a case where, for example, "P12345678" corresponding to the "OPERATOR ID", "S2345" corresponding to the "ORGANIZATION ID", and "W100" corresponding to the "OPERATION ID" are input as the identification information in the processing in S21, the event identification unit 111 identifies "ECU1" corresponding to the "ECU" and "CHANGE GEAR TO DRIVE" corresponding to the "MESSAGE" in the processing in S22.

Referring back to FIG. 5, for example, the information obtaining unit 113 refers to the specification information 131 stored in the information storage area 130 and obtains information corresponding to the message and the device identified in the processing in S22 (S23).

For example, in a case where the operators directly input information corresponding to the message and the device to the information processing apparatus 1 via the operator terminals 3, the information processing apparatus 1 does not necessarily perform the processing in S21 and S22. In this case, in the processing in S23, the information obtaining unit 113 may obtain the information corresponding to the message and the device input by the operators via the operator terminals 3. A specific example of the specification information 131 will be described below.

### [Specific Example of Specification Information]

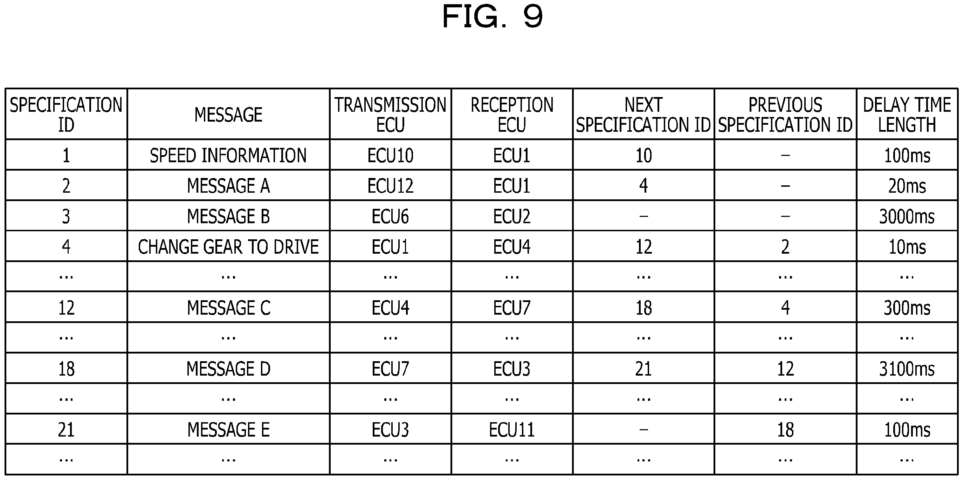

FIG. 9 is a diagram explaining a specific example of the specification information 131.

The specification information 131 illustrated in FIG. 9 includes, as items, a "SPECIFICATION ID", a "MESSAGE", a "TRANSMISSION ECU", and a "RECEPTION ECU". The "SPECIFICATION ID" identifies specifications corresponding to transmission and reception of the messages. The "MESSAGE" identifies the messages transmitted and received between the ECUs. The "TRANSMISSION ECU" identifies the ECUs that are transmission sources of the messages. "RECEPTION ECU" identifies the ECUs that are transmission destinations of the messages. The specification information 131 illustrated in FIG. 9 also includes, as the items, a "NEXT SPECIFICATION ID", a "PREVIOUS SPECIFICATION ID", and a "DELAY TIME LENGTH". The "NEXT SPECIFICATION ID" identifies the specifications of messages transmitted and received next to (immediately after) the messages. The "PREVIOUS SPECIFICATION ID" identifies the specifications of messages transmitted and received before (immediately before) the messages. In the "DELAY TIME LENGTH", delay time lengths allowed in transmission and reception of the messages are set.

For example, in the specification information 131 illustrated in FIG. 9, in a piece of the information on the first line, "1" is set as the "SPECIFICATION ID", "SPEED INFORMATION" is set as the "MESSAGE", "ECU10" is set as the "TRANSMISSION ECU", AND "ECU1" is set as the "RECEPTION ECU". Also in the specification information 131 illustrated in FIG. 9, in the piece of the information on the first line, "10" is set as the "NEXT SPECIFICATION ID", "-" that indicates that no information is set is set as the "PREVIOUS SPECIFICATION ID", and "100 ms" is set as the "DELAY TIME LENGTH".

Also in the specification information 131 illustrated in FIG. 9, in a piece of the information on the second line, "2" is set as the "SPECIFICATION ID", "MESSAGE A" is set as the "MESSAGE", "ECU12" is set as the "TRANSMISSION ECU", AND "ECU1" is set as the "RECEPTION ECU". Also in the specification information 131 illustrated in FIG. 9, in the piece of the information on the second line, "4" is set as the "NEXT SPECIFICATION ID", "-" is set as the "PREVIOUS SPECIFICATION ID", and "20 ms" is set as the "DELAY TIME LENGTH". Description of other pieces of the information included in FIG. 9 is omitted herein.

Thus, for example, in the processing in S22, in a case where "ECU1" is identified as the "ECU" and "CHANGE GEAR TO DRIVE" is identified as the "MESSAGE", the information obtaining unit 113 refers to, for example, the specification information 131 illustrated in FIG. 9 in the processing in S23 and obtains a piece of the information in which "CHANGE GEAR TO DRIVE" is set in the "MESSAGE" and "ECU1" is set in the "TRANSMISSION ECU" (the piece of the information in which the "SPECIFICATION ID" is "4").

Referring back to FIG. 5, the information identification unit 114 refers to, for example, the specification information 131 stored in the information storage area 130 and identifies from the specification information 131 information continuous with, in terms of timing of transmission and reception of the message, the information obtained in the processing in S23 (S24).

For example, in the specification information 131 illustrated in FIG. 9, "4" is set in the "NEXT SPECIFICATION ID" of a piece of the information in which the "SPECIFICATION ID" is "2" (the piece of information on the second line), "12" is set in the "NEXT SPECIFICATION ID" of the piece of the information in which the "SPECIFICATION ID" is "4" (the piece of the information on the fourth line), "18" is set in the "NEXT SPECIFICATION ID" of the piece of the information in which the "SPECIFICATION ID" is "12" (a piece of the information on the sixth line), "21" is set in the "NEXT SPECIFICATION ID" of the piece of the information in which the "SPECIFICATION ID" is "18" (the piece of the information on the eighth line), and "-" is set in the "NEXT SPECIFICATION ID" of the piece of the information in which the "SPECIFICATION ID" is "21" (the piece of the information on the tenth line). Thus, the specification information 131 illustrated in FIG. 9 indicates that the messages respectively corresponding to the piece of the information in which the "SPECIFICATION ID" is "2", the piece of the information in which the "SPECIFICATION ID" is "4", the piece of the information in which the "SPECIFICATION ID" is "12", the piece of the information in which the "SPECIFICATION ID" is "18", and the piece of the information in which the "SPECIFICATION ID" is "21" are continuously transmitted and received.

Accordingly, for example, in a case where the piece of the information in which the "SPECIFICATION ID" is "4" is identified in the processing in S23, the information identification unit 114 identifies, in the processing in S24, each of the piece of the information in which the "SPECIFICATION ID" is "2", the piece of the information in which the "SPECIFICATION ID" is "12", the piece of the information in which the "SPECIFICATION ID" is "18", and the piece of the information in which the "SPECIFICATION ID" is "21".

Although the specification information 131 illustrated in FIG. 9 includes the "PREVIOUS SPECIFICATION ID" as the item, for example, the specification information 131 does not necessarily include the "PREVIOUS SPECIFICATION ID" as the item. In this case, the information identification unit 114 may identify, as the previous specification corresponding to each specification (for example, a specification corresponding to the "PREVIOUS SPECIFICATION ID" of each specification), an other specification in which the same ECU as the ECU set in the "TRANSMISSION ECU" of each specification is set in the "RECEPTION ECU".

Although the specification information 131 illustrated in FIG. 9 includes the "NEXT SPECIFICATION ID" as the item, for example, the specification information 131 does not necessarily include the "NEXT SPECIFICATION ID" as the item. In this case, the information identification unit 114 may identify, as the next specification corresponding to each specification (for example, a specification corresponding to the "NEXT SPECIFICATION ID" of each specification), an other specification in which the same ECU as the ECU set in the "RECEPTION ECU" of each specification is set in the "TRANSMISSION ECU".

Although the specification information 131 illustrated in FIG. 9 includes the "DELAY TIME LENGTH" as the item, the specification information 131 may include, for example, a "COMMUNICATION INTERVAL" in which an interval at which the messages are transmitted and received is set as the item instead of the "DELAY TIME LENGTH".

The information output unit 115 generates, for example, the first sequence information 134 on transmission and reception of the messages included in the information obtained in the processing in S23 and the information identified in the processing in S24 out of the information included in the specification information 131 stored in the information storage area 130 (S25). The first sequence information 134 is information indicative of a transmission sequence of planned messages in response to the occurrences of the events. A specific example of the first sequence information 134 will be described below.

### [Specific Example of First Sequence Information]

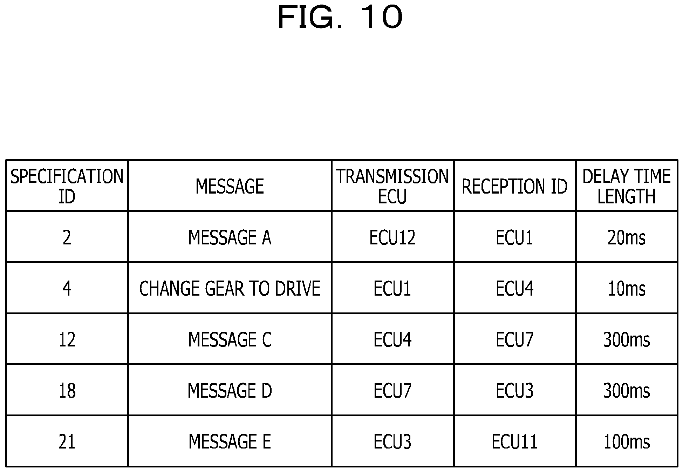

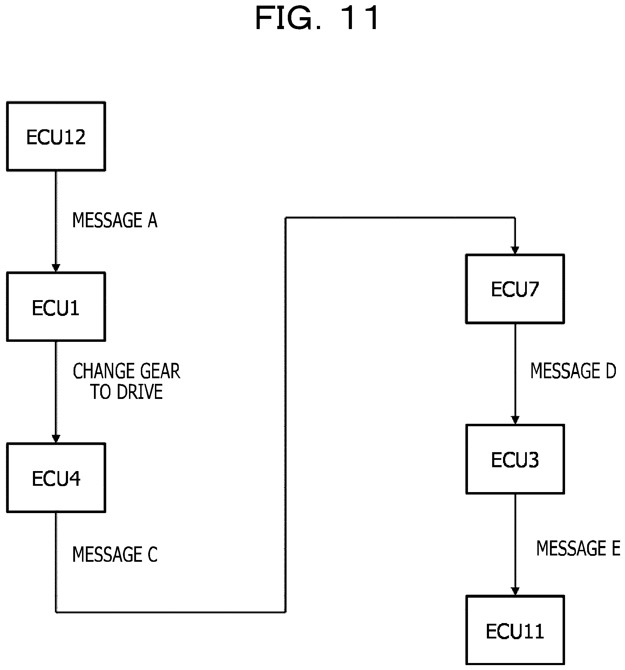

FIG. 10 is a diagram explaining a specific example of the first sequence information 134. FIG. 11 is a diagram (schematic diagram) schematically illustrating content indicated by the first sequence information 134.

The first sequence information 134 illustrated in FIG. 10 includes the "SPECIFICATION ID", the "MESSAGE", the "TRANSMISSION ECU", the "RECEPTION ECU", and the "DELAY TIME LENGTH" as the items out of the items included in the specification information 131 illustrated in, for example, FIG. 9.

For example, in the first sequence information 134 illustrated in FIG. 10, pieces of information that are respectively the same as the piece of the information in which the "SPECIFICATION ID" is "2", the piece of the information in which the "SPECIFICATION ID" is "4", the piece of the information in which the "SPECIFICATION ID" is "12", the piece of the information in which the "SPECIFICATION ID" is "18", and the piece of the information in which the "SPECIFICATION ID" is "21" out of the specification information 131 illustrated in, for example, FIG. 9 are set.

For example, the first sequence information 134 illustrated in FIG. 10 indicates that "MESSAGE A" is transmitted from ECU12 to ECU1, "CHANGE GEAR TO DRIVE" is transmitted from ECU1 to ECU4, "MESSAGE C" is transmitted from ECU4 to ECU7, "MESSAGE D" is transmitted from ECU7 to ECU3, and "MESSAGE E" is transmitted from ECU3 to ECU11 as illustrated in FIG. 11.

Referring back to FIG. 5, the information output unit 115 calculates, for example, a total time length of the delay time lengths included in the information obtained in the processing in S23 and the information identified in the processing in S24 out of the information included in the specification information 131 stored in the information storage area 130 (S26).

For example, in the specification information 131 illustrated in FIG. 9, "20 ms", "10 ms", "300 ms", "300 ms, and "100 ms" are respectively set in the "DELAY TIME LENGTH" of the piece of the information in which the "SPECIFICATION ID" is "2", the piece of the information in which the "SPECIFICATION ID" is "4", the piece of the information in which the "SPECIFICATION ID" is "12", the piece of the information in which the "SPECIFICATION ID" is "18", and the piece of the information in which the "SPECIFICATION ID" is "21". Accordingly, in the processing in S26, the information output unit 115 calculates, for example, "730 ms" as the total time length of the delay time lengths.

Then, the information output unit 115 outputs, for example, information corresponding to the first sequence information 134 generated in the processing in S25 and a slide bar corresponding to the total time length calculated in the processing in S26 to the output devices of the operator terminals 3 (S27). A specific example of a screen output to the output devices of the operator terminals 3 in the processing in S27 will be described below.

### [Specific Example of Screen Output in Processing in S27]

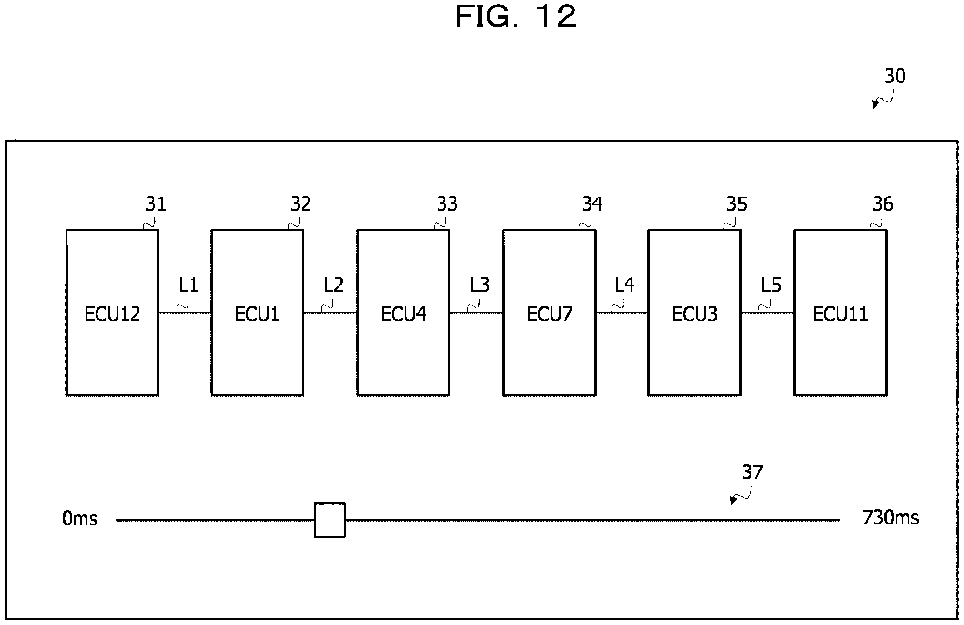

FIG. 12 explains a specific example of a screen 30 output to the output devices in the processing in S27.

On the screen 30 illustrated in FIG. 12, an object 31, an object 32, an object 33, an object 34, an object 35, and an object 36 that respectively correspond to ECU12, ECU1, ECU4, ECU7, ECU3, and ECU11 are displayed. Also on the screen 30 illustrated in FIG. 12, a line L1, a line L2, a line L3, a line L4, and a line L5 that respectively indicate that the messages are transmitted and received between ECU12 and ECU1, between ECU1 and ECU4, between ECU4 and ECU7, between ECU7 and ECU3, and between ECU3 and ECU11 are displayed. Also on the screen 30 illustrated in FIG. 12, a slide bar 37 that enables selection of a plurality of time lengths from 0 to 730 ms (the total time length calculated in the processing in S26) is displayed. Hereinafter, the objects 31, 32, 33, 34, 35, and 36 and the lines L1, L2, L3, L4, and L5 are also collectively referred to as second correspondence information.

For example, the operators move the slide bar 37 on the screen 30 in the left-right direction, thereby to designate a time of day at which a message subjected to the communication testing has been transmitted and received.

In a case where the corresponding information does not exist in the processing in S22 or S24, the information processing apparatus 1 may end the screen outputting process.

### [State Outputting Process]

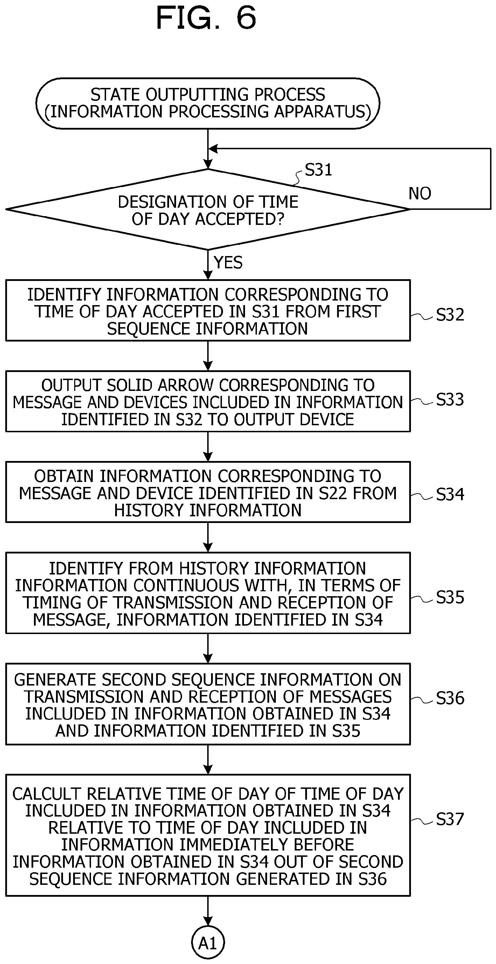

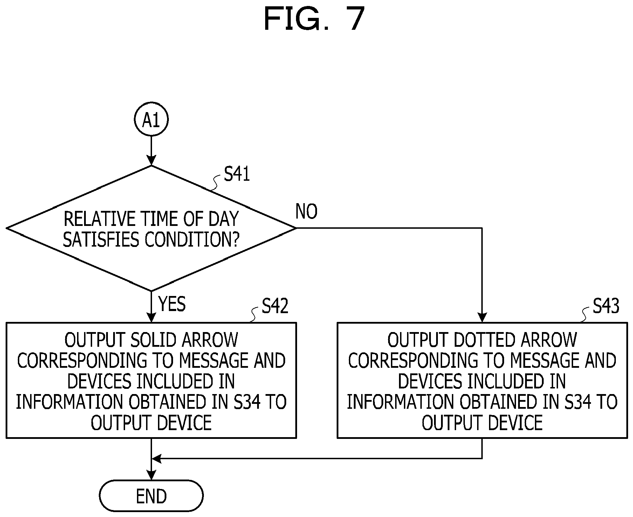

Next, a process of outputting information indicative of states of the communication between the ECUs (hereinafter, also referred to as a state outputting process) out of the communication state displaying process will be described. FIGs. 6 and 7 are flowcharts explaining the state outputting process.

For example, as illustrated in FIG. 6, the designation accepting unit 112 waits until the designation accepting unit 112 accepts designation of a time of day at which a communication state for a message is output (a time of day subjected to the communication testing) (NO in S31).

For example, the designation accepting unit 112 waits until, for example, the time of day is designated by operating the slide bar 37 included in the screen 30 output to the output devices in the processing in S27.

In a case where the designation of the time of day is accepted (YES in S31), the information identification unit 114 identifies, for example, information corresponding to the time of day accepted in the processing in S31 from the first sequence information 134 generated in the processing in S25 (S32).

For example, the information identification unit 114 adds, for example, the delay time lengths included in the first sequence information 134 stored in the information storage area 130 sequentially from first information. In a case where, for example, the accumulated delay time length becomes greater than or equal to the time length accepted in the processing in S31, the information identification unit 114 identifies information the delay time length of which is added last as information corresponding to the time of day accepted in the processing in S31.

For example, in the first sequence information 134 illustrated in FIG. 10, "20 ms" is set as the "DELAY TIME LENGTH" in the piece of the information on the first line, and "10 ms" is set as the "DELAY TIME LENGTH" in the piece of the information on the second line. Thus, for example, in a case where the time length accepted in the processing in S31 is "30 ms", the information identification unit 114 identifies the piece of the information on the second line included in the first sequence information 134 illustrated in FIG. 10.

For example, the information output unit 115 outputs a solid arrow corresponding to the message and the devices included in the piece of the information identified in the processing in S33 to the output devices (S33).

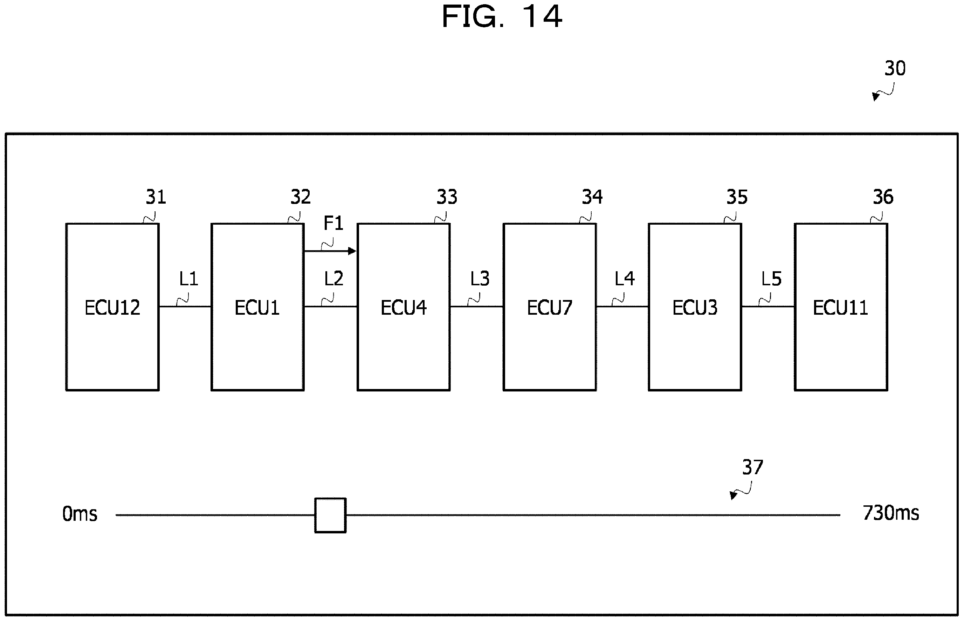

For example, in a case where the pieces of the information on the second line out of the information included in the first sequence information 134 illustrated in FIG. 10 is identified in the processing in S32, the information output unit 115 outputs, as illustrated in FIG. 14, for example, a solid arrow F1 extending from ECU1 (object 32) which is the transmission ECU included in the piece of the information identified in the processing in S32 to ECU4 (object 33) which is the reception ECU included in the pieces of the information identified in the processing in S32.

Next, the information identification unit 114 refers to, for example, the history information 132 stored in the information storage area 130 and identifies information corresponding to the message and the device identified in the processing in S22 (S34). A specific example of the history information 132 will be described below.

### [Specific Example of History Information]

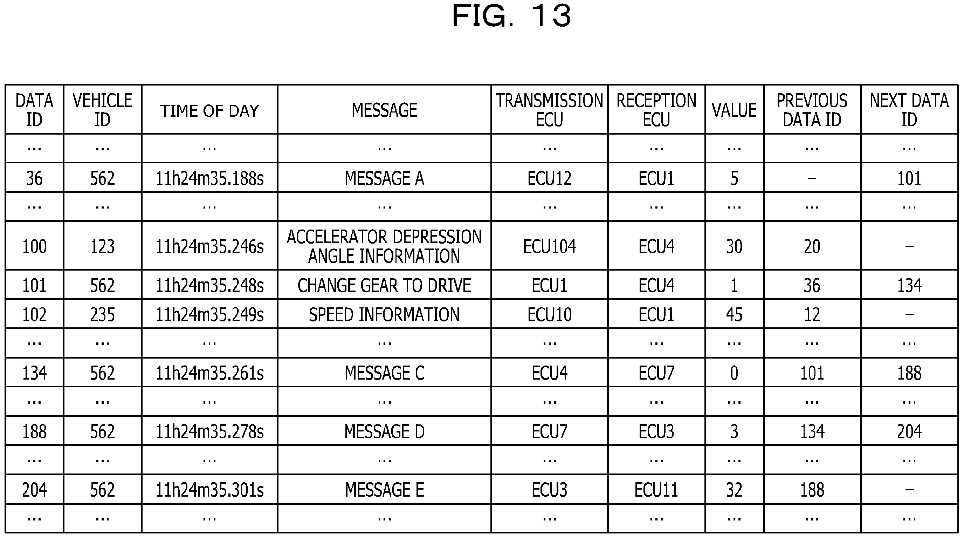

FIG. 13 is a diagram explaining a specific example of the history information 132.

The history information 132 illustrated in FIG. 13 includes, as the items, a "DATA ID", a "VEHICLE ID", and "TIME OF DAY". The "DATA ID" identifies data included in the history information 132. The "VEHICLE ID" identifies automobiles subjected to the communication testing. Generation times of day of the data included in the history information 132 are set in the "TIME OF DAY". The history information 132 illustrated in FIG. 13 also includes, as the items, a "MESSAGE", a "TRANSMISSION ECU", and a "RECEPTION ECU". The "MESSAGE" identifies the messages transmitted and received between the ECUs. The "TRANSMISSION ECU" identifies the ECUs that are transmission sources of the messages. The "RECEPTION ECU" identifies the ECUs that are transmission destinations of the messages. The history information 132 illustrated in FIG. 13 also includes, as the items, a "VALUE", a "NEXT DATA ID", and a "PREVIOUS DATA ID". Various types of values included in the data are set in the "VALUE". The "NEXT DATA ID" identifies the data corresponding to messages transmitted and received next to (immediately after) the messages. The "PREVIOUS DATA ID" identifies the data corresponding to messages transmitted and received before (immediately before) the messages.

For example, in the history information 132 illustrated in FIG. 13, in a piece of the information in which the "DATA ID" is "36" (the piece of the information on the second line), "562" is set as the "VEHICLE ID" and "11 h 24 m 35.188 s" is set as the "TIME OF DAY". Also in the history information 132 illustrated in FIG. 13, in the piece of the information in which the "DATA ID" is "36", "MESSAGE A" is set as the "MESSAGE", "ECU12" is set as the "TRANSMISSION ECU", AND "ECU1" is set as the "RECEPTION ECU". Also in the history information 132 illustrated in FIF. 13, in the piece of the information in which the "DATA ID" is "36", "5" is set as the "VALUE", "-" is set as the "PREVIOUS DATA ID", and "101" is set as the "NEXT DATA ID".

Also in the history information 132 illustrated in FIG. 13, in a piece of the information in which the "DATA ID" is "101" (the piece of the information on the fifth line), "562" is set as the "VEHICLE ID" and "11 h 24 m 35.248 s" is set as the "TIME OF DAY". Also in the history information 132 illustrated in FIG. 13, in the piece of the information in which the "DATA ID" is "101", "CHANGE GEAR TO DRIVE" is set as the "MESSAGE", "ECU1" is set as the "TRANSMISSION ECU", and "ECU4" is set as the "RECEPTION ECU". Also in the history information 132 illustrated in FIF. 13, in the piece of the information in which the "DATA ID" is "101", "1" is set as the "VALUE", "36" is set as the "PREVIOUS DATA ID", and "134" is set as the "NEXT DATA ID". Description of other pieces of the information included in FIG. 13 is omitted herein.

Thus, for example, in the processing in S22, in the case where "ECU1" is identified as the "ECU" and "CHANGE GEAR TO DRIVE" is identified as the "MESSAGE", the information identification unit 114 identifies, in the processing in S34, the piece of the information in which "ECU1" is set in the "TRANSMISSION ECU" and "CHANGE GEAR TO DRIVE" is set in the "MESSAGE" (the piece of the information in which the "DATA ID" is "101").

Referring back to FIG. 6, the information identification unit 114 refers to, for example, the history information 132 stored in the information storage area 130 and identifies information continuous with, in terms of timing of transmission and reception of the message, the information identified in the processing in S34 (S35).

For example, in the history information 132 illustrated in FIG. 13, "101" is set in the "NEXT DATA ID" of the piece of the information in which the "DATA ID" is 36" (the piece of information on the second line), "134" is set in the "NEXT DATA ID" of the piece of the information in which the "DATA ID" is "101" (the piece of the information on the fifth line), "188" is set in the "NEXT DATA ID" of the piece of the information in which the "DATA ID" is "134" (the piece of the information on the eighth line), "204" is set in the "NEXT DATA ID" of the piece of the information in which the "DATA ID" is "188" (the piece of the information on the tenth line), and "-" is set in the "NEXT DATA ID" of the piece of the information in which the "DATA ID" is "204" (the piece of the information on the twelfth line). Thus, the history information 132 illustrated in FIG. 13 indicates that the messages respectively corresponding to the piece of the information in which the "DATA ID" is "36", the piece of the information in which the "DATA ID" is "101", the piece of the information in which the "DATA ID" is "134", the piece of the information in which the "DATA ID" is "188", and the piece of the information in which the "DATA ID" is "204" are continuously transmitted and received.

Accordingly, for example, in the processing in S34, in the case where the piece of the information in which the "DATA ID" is "101" is identified, the information identification unit 114 identifies, in the processing in S35, each of the piece of the information in which the "DATA ID" is "36", the piece of the information in which the "DATA ID" is "134", the piece of the information in which the "DATA ID" is "188", and the piece of the information in which the "DATA ID" is "204".

Although the history information 132 illustrated in FIG. 13 includes the "PREVIOUS DATA ID" as the item, for example, the history information 132 does not necessarily include the "PREVIOUS DATA ID" as the item. In this case, the information identification unit 114 may identify an other piece of the data as a piece of the data corresponding to the message transmitted and received before the message corresponding to each piece of the data (for example, a piece of the data corresponding to the "PREVIOUS DATA ID" of each piece of the data). In the other piece of the data, a time of day before the time of day set in the "TIME OF DAY" of each piece of the data is set in the 'TIME OF DAY", the same ID as the ID set in the "VEHICLE ID" of each piece of the data is set in the "VEHICLE ID", and the same ECU as the ECU set in the "TRANSMISSION ECU" of each piece of the data is set in the "RECEPTION ECU".

In this case, the information identification unit 114 may set the "NEXT DATA ID" of a piece of the data corresponding to the message transmitted and received before the message corresponding to each piece of the data as the "DATA ID" of each piece of the data.

Although the history information 132 illustrated in FIG. 13 includes the "NEXT DATA ID" as the item, for example, the history information 132 does not necessarily include the "NEXT DATA ID" as the item. In this case, the information identification unit 114 may identify an other piece of the data as a piece of the data corresponding to the message transmitted and received next to the message corresponding to each piece of the data (for example, a piece of the data corresponding to the "NEXT DATA ID" of each piece of the data). In the other piece of the data, a time of day after the time of day set in the "TIME OF DAY" of each piece of the data is set in the "TIME OF DAY", the same ID as the ID set in the "VEHICLE ID" of each piece of the data is set in the "VEHICLE ID", and the same ECU as the ECU set in the "RECEPTION ECU" of each piece of the data is set in the "TRANSMISSION ECU".

In this case, the information identification unit 114 may set the "PREVIOUS DATA ID" of a piece of the data corresponding to the message transmitted and received next to the message corresponding to each piece of the data as the "DATA ID" of each piece of the data.

Next, the information output unit 115 generates, for example, the second sequence information 135 for the transmission and the reception of the messages included in the information obtained in the processing in S34 and the information identified in the processing in S35 out of the information included in the history information 132 stored in the information storage area 130 (S36). The second sequence information 135 is information indicative of a transmission sequence of the messages having been actually performed in response to the occurrence of the events. A specific example of the second sequence information 135 will be described below.

### [Specific Example of Second Sequence Information]

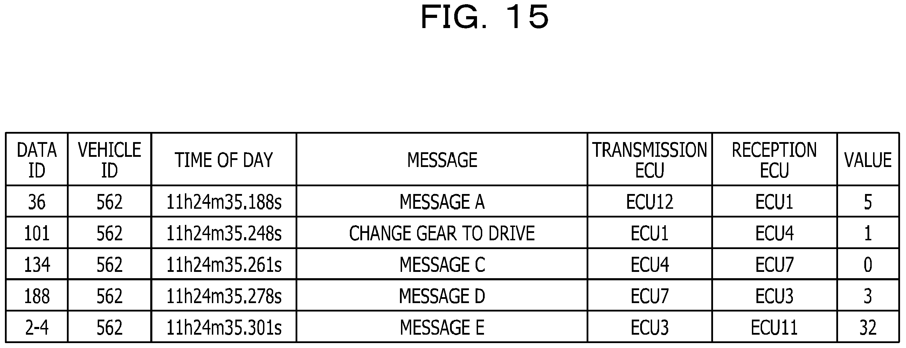

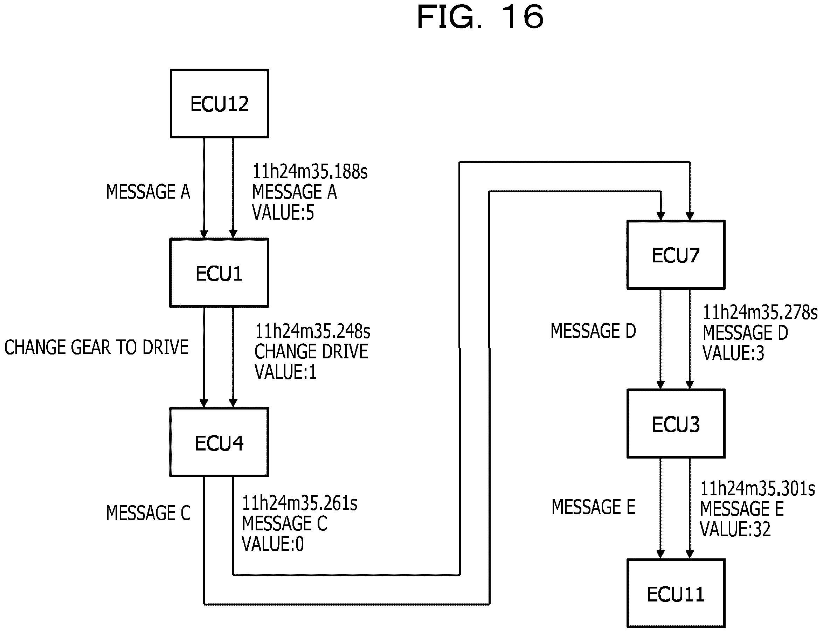

FIG. 15 is a diagram explaining a specific example of the second sequence information 135. FIG. 16 is a diagram (schematic diagram) schematically illustrating content indicated by the first sequence information 134 and the second sequence information 135. In FIG. 16, a line on the left side between the ECUs correspond to the first sequence information 134, and a line on the right side between the ECUs correspond to the second sequence information 135.

The second sequence information 135 illustrated in FIG. 15 includes the "DATA ID", the "VEHICLE ID", the "TIME OF DAY", the "MESSAGE", the "TRANSMISSION ECU", the "RECEPTION ECU", and the "VALUE" as the items out of the items included in the history information 132 illustrated in, for example, FIG. 13.

For example, in the second sequence information 135 illustrated in FIG. 15, pieces of information that are respectively the same as the piece of the information in which the "DATA ID" is "36", the piece of the information in which the "DATA ID" is "101", the piece of the information in which the "DATA ID" is "134", the piece of the information in which the "DATA ID" is "188", and the piece of the information in which the "DATA ID" is "204" out of the history information 132 illustrated in, for example, FIG. 13 are set.

For example, as illustrated in FIG. 16, the second sequence information 135 illustrated in FIG. 15 indicates that the "TIME OF DAY" and the "VALUE" corresponding to "MESSAGE A" transmitted from ECU12 to ECU1 are respectively "11 h 24 m 35.188 s" and "5", and the "TIME OF DAY" and the "VALUE" corresponding to "CHANGE GEAR TO DRIVE" transmitted from ECU1 to ECU4 are respectively "11 h 24 m 35.248 s" and "1". Also, the second sequence information 135 illustrated in FIG. 15 indicates that the 'TIME OF DAY" and the "VALUE" corresponding to "MESSAGE C" transmitted from ECU4 to ECU7 are respectively "11 h 24 m 35.261 s" and "0", and the "TIME OF DAY" and the "VALUE" corresponding to "MESSAGE D" transmitted from ECU7 to ECU3 are respectively "11 h 24 m 35.278 s" and "3". Also, the second sequence information 135 indicates that the "TIME OF DAY" and the "VALUE" corresponding to "MESSAGE E" transmitted from ECU3 to ECU11 are respectively "11 h 24 m 35.301 s" and "32".

Referring back to FIG. 6, the information identification unit 114 identifies, for example, information including the message having been transmitted and received immediately before the message included in the information obtained in the processing in S34 out of the second sequence information 135 generated in the processing in S36. The information identification unit 114 calculates, for example, a relative time of day (hereinafter, also referred to as a first relative time of day) of the time of day included in the information obtained in the processing of S34 relative to the time of day included in the identified information (S37).

For example, in the second sequence information 135 illustrated in FIG. 15, in the piece of the information in which the "DATA ID" is "36", "11 h 24 m 35.188 s" is set as the "TIME OF DAY", and in the piece of the information in which the "DATA ID" is "101", "11 h 24 m 35.248 s" is set as the "TIME OF DAY". Thus, the information identification unit 114 calculates, for example, "60 ms" as the first relative time of day.

Then, as illustrated in FIG. 7, the information identification unit 114 determines, for example, whether the difference between the first relative time of day calculated in the processing in S37 and the relative time of day corresponding to the delay time length included in the information identified in the processing is S32 (hereinafter, also referred to as a second relative time of day) is smaller than or equal to a predetermined threshold (S41).

For example, the information identification unit 114 identifies, for example, information corresponding to the information identified in the processing in S37 (second sequence information 135) out of the first sequence information 134 stored in the information storage area 130. The information identification unit 114 calculates, for example, the delay time length included in the identified information as the second relative time of day. The information identification unit 114 determines, for example, whether the difference between the first relative time of day calculated in the processing in S37 and the second relative time of day calculated in the processing in S41 is smaller than or equal to the predetermined threshold.

For example, in the first sequence information 134 illustrated in FIG. 10, "10 ms" is set as the "DELAY TIME LENGTH" in the piece of the information on the second line. Thus, for example, in a case where the piece of the information on the second line in the first sequence information 134 illustrated in FIG. 10 is identified in the processing in S32, the information identification unit 114 calculates "10 ms" as the second relative time of day. For example, in a case where the first relative time of day calculated in the processing in S37 is "60 ms" and the predetermined threshold is "30 ms", the information identification unit 114 determines that the difference between the first relative time of day calculated in the processing in S37 and the second relative time of day calculated in the processing in S41 (50 ms) is greater than the predetermined threshold (30 ms).

As a result, in a case where it is determined that the difference between the first relative time of day calculated in the processing in S37 and the second relative time of day corresponding to the delay time length included in the information identified in the processing in S32 is smaller than or equal to the predetermined threshold (YES in S41), the information output unit 115 outputs, for example, a solid arrow corresponding to the message and the devices included in the information obtained in the processing in S34 to the output devices (S42).

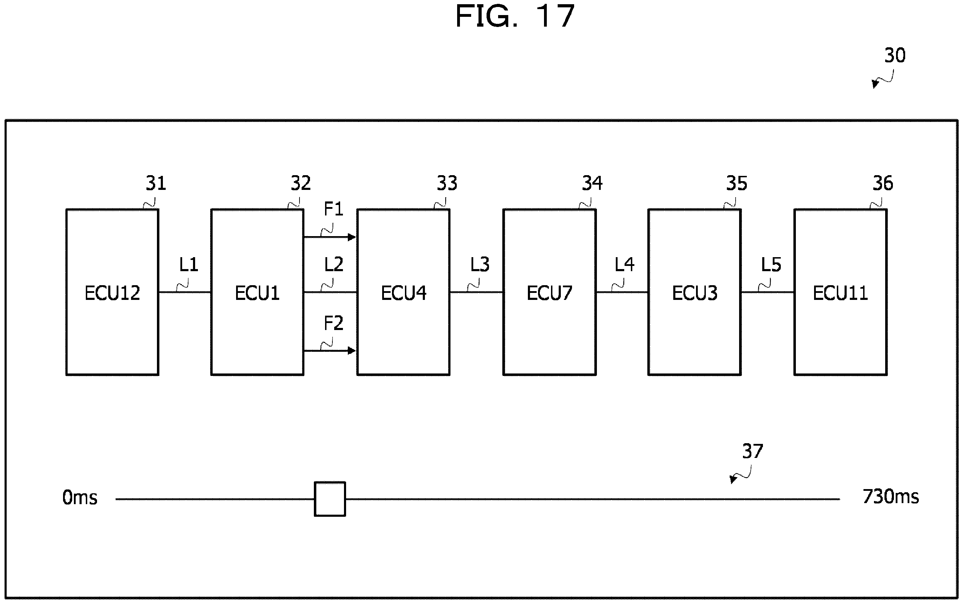

For example, as illustrated in FIG. 17, the information output unit 115 outputs, for example, a solid arrow F2 (for example, an arrow having a color different from that of the solid arrow F1) extending from the ECU1 (object 32) to the ECU4 (object 33).

For example, in this case, the correspondence information 136 including the solid arrow F1 identified from the specification information 131 and the solid arrow F2 identified from the history information 132 is displayed between ECU1 and ECU4 on the screen 30.

Thus, the operators may check that the solid arrow F1 and the solid arrow F2 are each displayed between the ECU1 and the ECU4 by browsing the screen 30 output to the output devices. Accordingly, by browsing the screen 30 output to the output devices, the operators may easily determine that the message has been normally transmitted and received between the ECU1 and the ECU4 in response to the occurrence of the event identified in the processing in S22.

In contrast, in a case where it is determined that the difference between the first relative time of day calculated in the processing in S37 and the delay time length included in the information identified in the processing in S32 is neither smaller than nor equal to the predetermined threshold (NO in S41), the information output unit 115 outputs, for example, a dotted arrow corresponding to the message and the devices included in the information obtained in the processing in S34 to the output devices (S43).

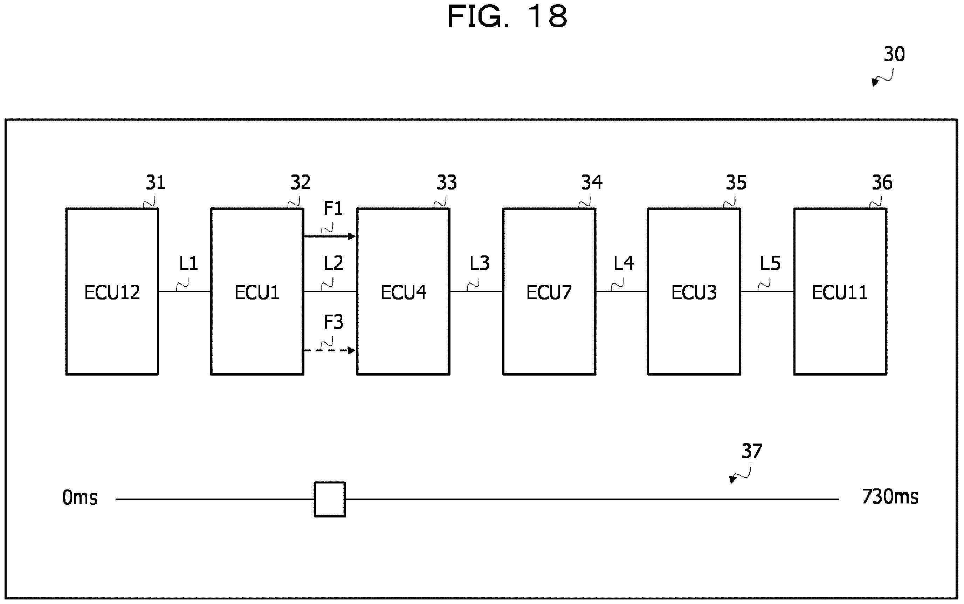

For example, as illustrated in FIG. 18, the information output unit 115 displays, for example, a dotted arrow F3 extending from the ECU1 (object 32) to the ECU4 (object 33).

Thus, the operators may check that the solid arrow F2 is not displayed between the ECU1 and the ECU4 by browsing the screen 30 output to the output devices. Accordingly, by browsing the screen 30 output to the output devices, the operators may easily determine that the message has not been normally transmitted and received between the ECU1 and the ECU4 in response to the occurrence of the event identified in the processing in S22.

In a case where the corresponding information does not exist in the processing in S32 or S34, the information processing apparatus 1 may end the state outputting process.

As described above, the information processing apparatus 1 according to the present embodiment accepts, for example, the designation of the event performed by the operators via the operator terminals 3.

The information processing apparatus 1 obtains from the information storage area 130, for example, the specification information 131 on the specification of the communication performed in response to the occurrence of the event the designation of which has been accepted and the history information 132 on the history of the communication having been performed in response to the occurrence of the event the designation of which has been accepted. Next, for example, out of the obtained specification information 131, the information processing apparatus 1 identifies the first specification information 131 corresponding to the communication performed at the relative time of day (the first relative time of day) separated from the start point set at the occurrence time of day of the event, and out of the obtained history information 132, the information processing apparatus 1 identifies the first history information 132 corresponding to the communication having been performed at the relative time of day (the first relative time of day) separated from the start point set at the occurrence time of day of the event.

Then, for example, the information processing apparatus 1 outputs to the output devices of the operator terminals 3 the correspondence information 136 in which the information indicative of the communication corresponding to the first specification information 131 having been identified and the information on the communication corresponding to the first history information 132 having been identified are associated with each other.

For example, the information processing apparatus 1 outputs, for example, the correspondence information 136 that indicates whether the specification information 131 corresponding to the communication performed at the first relative time of day (first specification information 131) and the history information 132 corresponding to the communication having been performed at the first relative time of day (first history information 132) indicate the same content. Thus, for example, in a case where the first history information 132 indicates that the communication corresponding to the first specification information 131 is not performed at the first relative time of day, the information processing apparatus 1 outputs the correspondence information 136 that indicates that the content indicated by the first specification information 131 and the content indicated by the first history information 132 are not the same.

In this way, the information processing apparatus 1 according to the present embodiment allows the operators to browse the information (correspondence information 136) with which whether the transmission and the reception of each message have been performed at the specified time of day may be easily determined. Accordingly, the operators may easily check the result of the communication testing performed between the ECUs when the operators browse the information output to the output devices. Thus, the operators may suppress an increase in a load of operating due to the execution of the communication testing between the ECUs.

### [Second Embodiment]

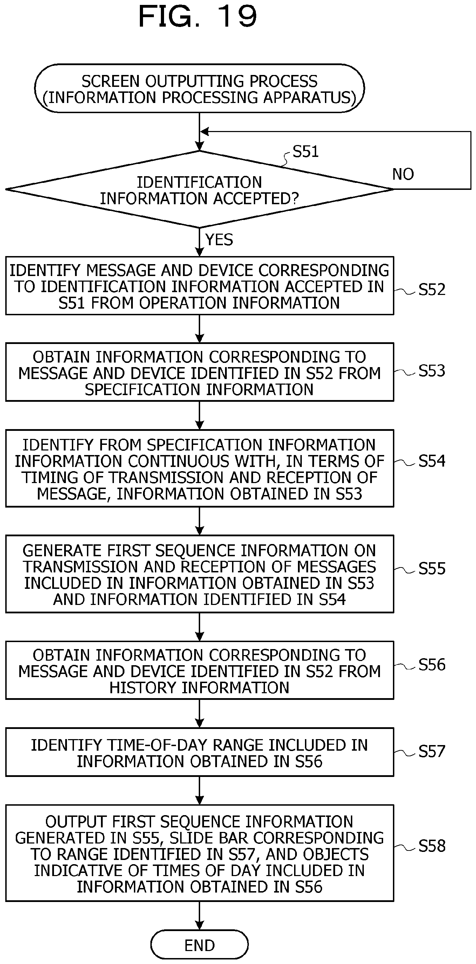

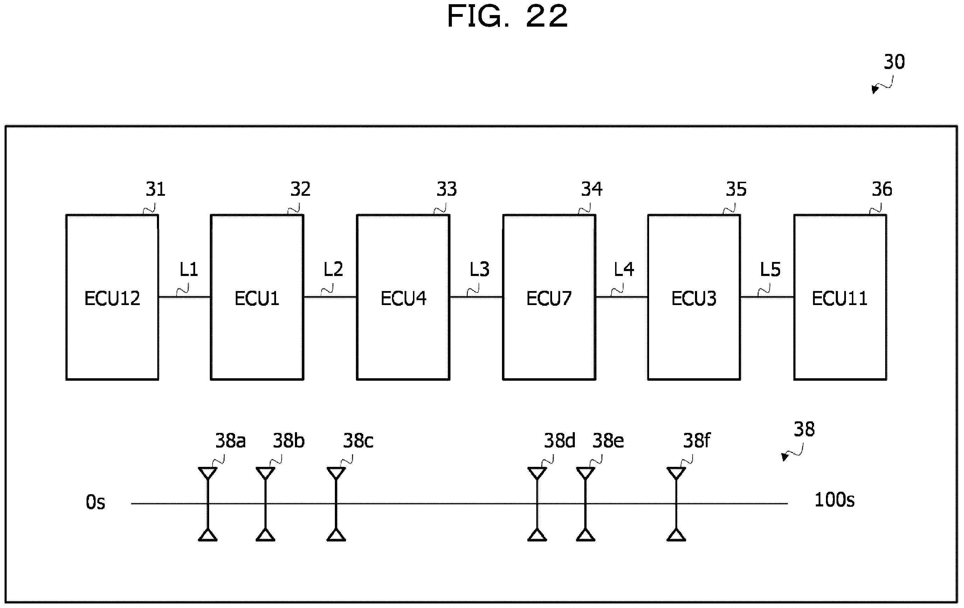

Next, a second embodiment will be described. FIGs. 19 to 21 are flowcharts explaining the communication state displaying process according to the second embodiment. FIGs. 22 to 25 are diagrams explaining the communication state displaying process according to the second embodiment.

### [Screen Outputting Process]

First, the screen outputting process according to the second embodiment will be described. FIG. 19 is a flowchart explaining the screen outputting process.

As illustrated in FIG. 19, the event identification unit 111 waits until, for example, identification information of the operators input by the operators via the operator terminals 3 is accepted (NO in S51).

In a case where the identification information is accepted (YES in S51), for example, the event identification unit 111 refers to the operation information 133 stored in the information storage area 130 and identifies the message and the devices corresponding to the identification information accepted in the processing in S51 (S52).

Next, for example, the information obtaining unit 113 refers to the specification information 131 stored in the information storage area 130 and obtains information corresponding to the message and the devices identified in the processing in S52 (S53).

The information identification unit 114 refers to, for example, the specification information 131 stored in the information storage area 130 and identifies from the specification information 131 information continuous with, in terms of timing of transmission and reception of the message, the information obtained in the processing in S53 (S54).

Then, the information output unit 115 generates, for example, the first sequence information 134 for the transmission and the reception of the messages included in the information obtained in the processing in S53 and the information identified in the processing in S54 out of the information included in the specification information 131 stored in the information storage area 130 (S55).

For example, the information obtaining unit 113 refers to the history information 132 stored in the information storage area 130 and obtains information corresponding to the message and the devices identified in the processing in S52 (S56).

For example, in a case where a plurality of pieces of information corresponding to the message and the devices identified in the processing in S52 are included in the history information 132, the information obtaining unit 113 obtains each of the plurality of pieces of information.

Next, the information identification unit 114 identifies, for example, a time-of-day range included in the information obtained in the processing in S56 (S57).

For example, the information identification unit 114 refers to, for example, the history information 132 stored in the information storage area 130 and identifies a piece of the information continuous with, in terms of timing of transmission and reception of the message, the piece of the information obtained in the processing in S56 for each of the pieces of the information obtained in the processing in S56. The information identification unit 114 identifies, for example, a range including the times of day included in the identified pieces of the information as the time-of-day range included in the information obtained in the processing in S56.

The information output unit 115 outputs, for example, the first sequence information 134 generated in the processing in S55, a slide bar corresponding to the range identified in the processing in S57, and objects indicative of the times of day included in the information obtained in the processing in S56 (S58).

For example, in a case where the operators input the time-of-day range via the operator terminals 3, the information processing apparatus 1 does not necessarily perform the processing in S57. In this case, in the processing in S58, the information output unit 115 may output the slide bar corresponding to the time-of-day range input by the operators via the operator terminals 3.

### [Specific Example of Screen Output in Processing in S58]

FIG. 22 explains a specific example of the screen 30 output to the output devices in the processing in S58.

On the screen 30 illustrated in FIG. 22, the object 31, the object 32, the object 33, the object 34, the object 35, and the object 36 that respectively correspond to ECU12, ECU1, ECU4, ECU7, ECU3, and ECU11 are displayed. Also on the screen 30 illustrated in FIG. 22, the line L1, the line L2, the line L3, the line L4, and the line L5 that respectively indicate that the messages are transmitted and received between ECU12 and ECU1, between ECU1 and ECU4, between ECU4 and ECU7, between ECU7 and ECU3, and between ECU3 and ECU11 are displayed. Also on the screen 30 illustrated in FIG. 22, a slide bar 38 that enables selection of a plurality of time lengths included in a range from 0 s to 100 s (the range identified in the processing in S57) is displayed. Also on the screen 30 illustrated in FIG. 22, an object 38a, an object 38b, an object 38c, an object 38d, an object 38e, and an object 38f indicative of the times of day included in the information obtained in the processing in S56 are displayed.

For example, the operators select one of the object 38a, the object 38b, the object 38c, the object 38d, the object 38e, and the object 38f in the slide bar 38 to designate a time frame in which the message subjected to the communication testing has been transmitted and received.

For example, in a case where a plurality of pieces of the information are identified from the history information 132 in the processing in S56, the information processing apparatus 1 preferably causes the operators to select a time frame subjected to the communication testing. Thus, as illustrated in FIG. 22, the information output unit 115 according to the second embodiment outputs the screen 30 on which the time frame subjected to the communication testing is selectable.

Accordingly, for example, when the operators perform desired selection via the screen 30 output to the output devices, the operators may designate the time frame in which the communication testing is performed.

### [State Outputting Process]

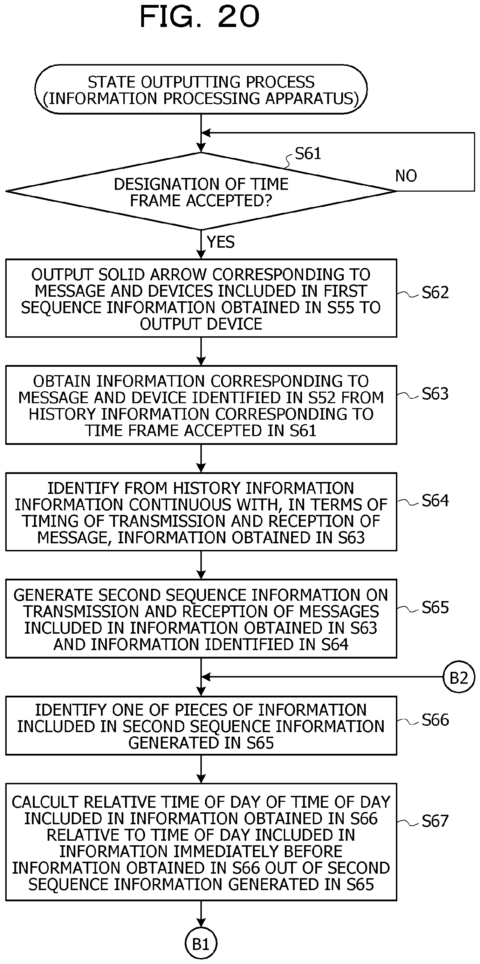

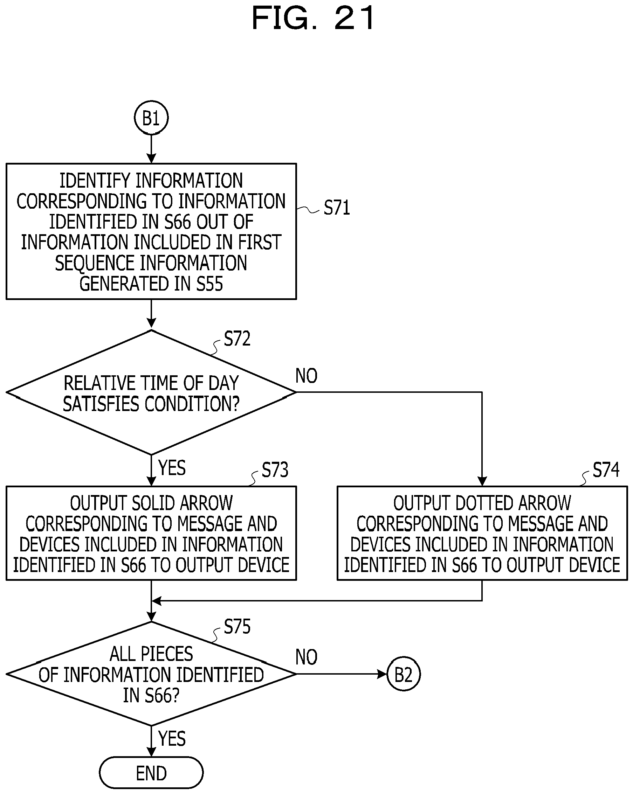

Next, the state outputting process according to the second embodiment will be described. FIGs. 20 and 21 are flowcharts explaining the state outputting process.

As illustrated in FIG. 20, the designation accepting unit 112 waits, for example, until designation of the time frame in which the communication testing is performed is accepted (NO in S61).

For example, the designation accepting unit 112 waits until, for example, the time frame is designated by operating the slide bar 38 included in the screen 30 output to the output devices in the processing in S58.

For example, in a case where the designation of the time frame is accepted (YES in S61), the information identification unit 114 outputs solid arrows corresponding to the messages and the devices included in the information identified in the processing in S55 to the output devices (S62).

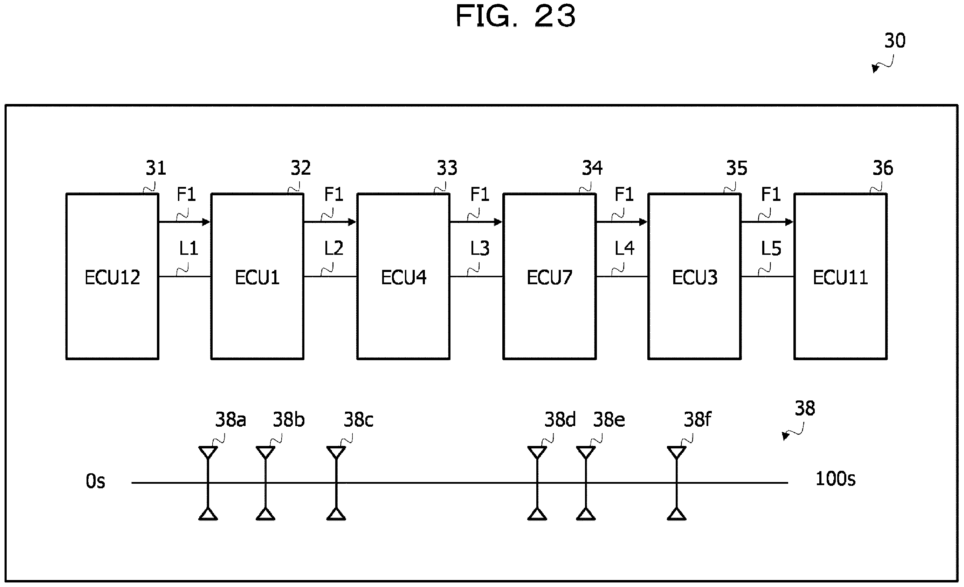

For example, as illustrated in, for example, FIG. 23, the information output unit 115 displays solid arrows F1 between the ECUs.

Next, the information identification unit 114 refers to, for example, pieces of the history information 132 corresponding to the time frame accepted in the processing in S61 out of the history information 132 stored in the information storage area 130 and identifies the piece of the information corresponding to the message and the devices identified in the processing in S52 (S63).

Next, the information identification unit 114 refers to, for example, pieces of the history information 132 corresponding to the time frame accepted in the processing in S61 out of the history information 132 stored in the information storage area 130 and identifies the piece of the information continuous with, in terms of timing of transmission and reception of the message, the piece of the information identified in the processing in S63 (S64).

The information identification unit 114 generates the second sequence information 135 on transmission and reception of the messages included in the information obtained in the processing in S63 and the information identified in the processing in S64 (S65).

Next, the information identification unit 114 identifies, for example, a single piece of the information out of the information identified in the processing in S64 (S66).

The information identification unit 114 identifies, for example, information including the message having been transmitted and received immediately before the message included in the information identified in the processing in S66 out of the second sequence information 135 generated in the processing in S65. The information identification unit 114 calculates, for example, the first relative time of day of the time of day included in the information identified in the processing in S66 relative to the time of day included in the identified information (S67).

Then, as illustrated in FIG. 21, the information identification unit 114 identifies, for example, information corresponding to the information identified in the processing in S66 out of the information included in the first sequence information 134 generated in the processing in S55 (S71).

Then, the information identification unit 114 determines, for example, whether the difference between the first relative time of day calculated in the processing in S67 and the second relative time of day corresponding to the delay time length included in the information identified in the processing in S71 is smaller than or equal to the predetermined threshold (S72).

As a result, in a case where it is determined that the difference between the first relative time of day calculated in the processing in S67 and the second relative time of day corresponding to the delay time length included in the information identified in the processing in S71 is smaller than or equal to the predetermined threshold (YES in S72), the information output unit 115 outputs, for example, a solid arrow corresponding to the message and the devices included in the information identified in the processing in S66 to the output devices (S73).

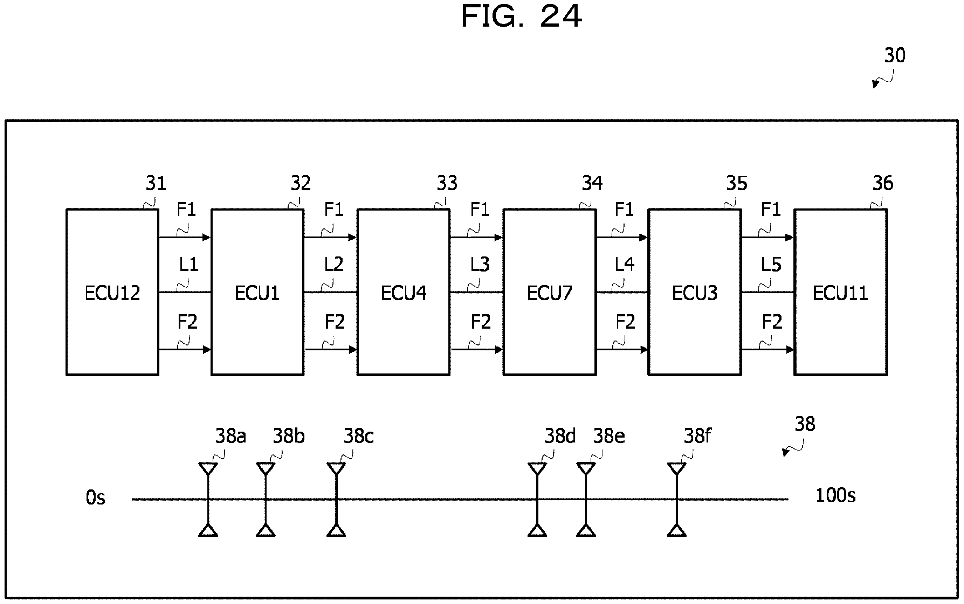

For example, in this case, as illustrated in FIG. 24, the information output unit 115 displays, for example, solid arrows F2 between all the ECUs.

In contrast, in a case where it is determined that the difference between the first relative time of day calculated in the processing in S67 and the second relative time of day corresponding to the delay time length included in the information identified in the processing in S71 is neither smaller than nor equal to the predetermined threshold (NO in S72), the information output unit 115 outputs, for example, a dotted arrow corresponding to the message and the devices included in the information identified in the processing in S66 to the output devices (S74).

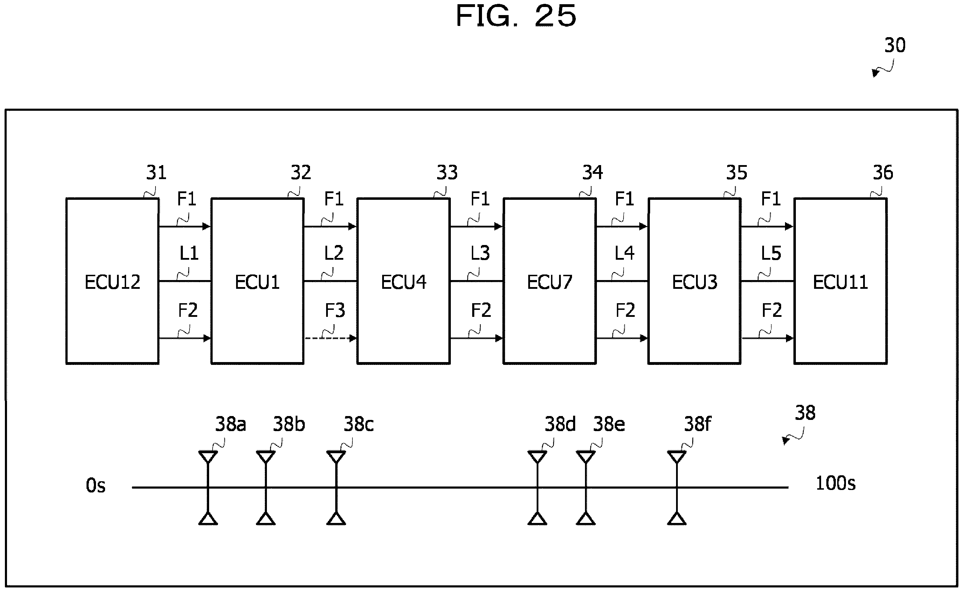

For example, in this case, as illustrated in FIG. 25, the information output unit 115 outputs, for example, a dotted arrow F3 between some ECUs (between ECU1 and ECU4) and outputs a solid arrows F2 between the other ECUs.

For example, in this case, the correspondence information 136 including the solid arrows F1 identified from the specification information 131 and the solid arrows F2 and the dotted arrow F3 identified from the history information 132 is displayed on the screen 30.

For example, the information identification unit 114 determines whether all the pieces of the information included in the second sequence information 135 generated in S65 have been identified (S75).

As a result, in a case where it is determined that not all the pieces of the information included in the second sequence information 135 generated in S65 have been identified (NO in S75), the information identification unit 114 performs the processing in and after S66 again.

In contrast, in a case where it is determined that all the pieces of the information included in the second sequence information 135 generated in S65 have been identified (YES in S75), the information processing apparatus 1 ends the state outputting process.

Accordingly, for example, when the operators perform desired selection via the screen 30 output to the output devices, the operators may designate the time frame in which the communication testing is performed.

The above embodiments are summarized as following appendices.

## Claims

1. A computer-implemented method of displaying a communication state, the method comprising:
obtaining, from a storage device, specification information and history information, the specification information being information indicating a specification of a communication performed in response to an occurrence of an event, the history information being information indicating a history of the communication performed in response to the occurrence of the event;
identifying, out of the obtained specification information, first specification information corresponding to the communication performed at a relative time point separated from a start point set at an occurrence time point of the event;
identifying, out of the obtained history information, first history information corresponding to the communication performed at the relative time point; and
outputting, to an output device, first correspondence information in which information indicative of the communication corresponding to the identified first specification information and information on the communication corresponding to the identified first history information are associated with each other.

2. The computer-implemented method according to claim 1, wherein
the outputting is configured to:
identify a plurality of electronic devices for which communication that corresponds to the obtained specification information is performed; and
output, to the output device together with the first correspondence information, second correspondence information in which information indicative of the communication corresponding to the obtained specification information and information indicative of the identified plurality of electronic devices are associated with each other.

3. The computer-implemented method according to claim 2, further comprising:
in a case where pieces of the history information that respectively correspond to a plurality of occurrences of communication which have been respectively performed in response to a plurality of occurrences of the event are obtained, outputting to the output device a plurality of pieces of communication information respectively indicative of the plurality of occurrences of the communication; and
accepting designation of any one of the plurality of pieces of communication information, wherein
the identifying is configured to identify, as the first history information, a piece of the history information corresponding to one of the occurrences of the communication which has been performed at the relative time of day separated from the start point set at one of the occurrence times of day of the event corresponding to the one of the pieces of communication information the designation of which has been accepted.

4. The computer-implemented method according to claim 1, wherein
in a case where the first specification information and the first history information are each identified, the outputting is configured to output, as the first correspondence information, information that includes information indicative of presence of the first specification information and information indicative of presence of the first history information.

5. The computer-implemented method according to claim 1, wherein
in a case where the first specification information is identified and the first history information is not identified, the outputting is configured to output, as the first correspondence information, information that includes information indicative of presence of the first specification information and information indicative of absence of the first history information.

6. A program of displaying a communication state, the program comprising instructions which, when the program is executed by a computer, cause the computer to perform processing including:
obtaining, from a storage device, specification information and history information, the specification information being information indicating a specification of a communication performed in response to an occurrence of an event, the history information being information indicating a history of the communication performed in response to the occurrence of the event;
identifying, out of the obtained specification information, first specification information corresponding to the communication performed at a relative time point separated from a start point set at an occurrence time point of the event;
identifying, out of the obtained history information, first history information corresponding to the communication performed at the relative time point; and
outputting, to an output device, first correspondence information in which information indicative of the communication corresponding to the identified first specification information and information on the communication corresponding to the identified first history information are associated with each other.
